Europäisches Patentamt

European Patent Office

Office européen des brevets

(19)

(11) **EP 1 195 597 A1**

(12) **EUROPÄISCHE PATENTANMELDUNG**

(43) Veröffentlichungstag:
**10.04.2002 Patentblatt 2002/15**

(51) Int Cl.⁷: **G01N 21/17**

(21) Anmeldenummer: **00121937.7**

(22) Anmeldetag: **09.10.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Siemens Building Technologies AG**
**8034 Zürich (CH)**

(72) Erfinder:
• **Forster, Martin, Dr.**
  **8645 Jona (CH)**
• **Nebiker, Peter W., Dr.**
  **8053 Zürich (CH)**

(74) Vertreter: **Dittrich, Horst, Dr.**
**Siemens Building Technologies AG,**
**Fire & Security Products**
**8708 Männedorf (CH)**

(54) **Optoakustische Messanordnung und Verwendung der Messanordnung**

(57)     Die Messanordnung enthält je eine Mess- und Referenzzelle (9, 10) und diesen zugeordnete Mikrofone (11 bzw. 12), an welche eine Auswerteelektronik (7, 8) angeschlossen ist, in welcher eine Subtraktion der Signale der Mikrofone (11 bzw.12) erfolgt, sowie eine Strahlungsquelle (5) zur modulierten Beaufschlagung der Messzelle (9). Die Modulationsfrequenz der Strahlungsquelle (5) stimmt mit der Resonanzfrequenz der Messzelle (9) überein, und die Mess- und die Referenzzelle (9 bzw. 10) sind gegenüber dem nachzuweisenden Gas und/oder Aerosol mindestens einseitig offen.

Die Messanordnung wird als Rauchmelder, Gasmelder, Brandgefahrenmelder oder als kombinierter Rauch- und Gasmelder verwendet, wobei jeweils die Messzelle (9) von einer Strahlung einer Wellenlänge beaufschlagt ist, bei welcher eine betreffende nachzuweisende Substanz absorbiert und dadurch ein optoakustischer Effekt erzeugt wird

FIG. 2

EP 1 195 597 A1

## Beschreibung

Die vorliegende Erfindung betrifft eine optoakustische Messanordnung für den Nachweis von Gasen und/ oder Aerosolen, mit je einer Mess- und Referenzzelle und diesen zugeordneten Mikrofonen, an welche eine Auswerteelektronik angeschlossen ist, in welcher eine Subtraktion der Signale der Mikrofone erfolgt, und mit einer Strahlungsquelle zur modulierten Beaufschlagung der Messzelle, wobei die Modulationsfrequenz der Strahlungsquelle mit der Resonanzfrequenz der Messzelle übereinstimmt.

Beim optoakustischen oder fotoakustischen Effekt wird durch die Bestrahlung eines zu detektierenden Gases durch moduliertes Licht eine akustische Druckwelle verursacht, deren Grösse in direktem Verhältnis zur Konzentration des betreffenden Gases steht. Die akustische Druckwelle entsteht deswegen, weil das Gas die Lichtstrahlung absorbiert und sich dadurch erwärmt. Daraus resultiert eine thermische Ausdehnung und, entsprechend der Modulation der Lichtstrahlung, eine periodische Druckschwankung. Die beiden Zellen werden in der Regel als Mess- und Referenzzelle bezeichnet, und die Messanordnung ist so ausgebildet, dass entweder die Zellen voneinander getrennt sind und die Strahlung beide Zellen durchsetzt (C. F. Dewey, Jr. : Opto-acoustic Spectroscopy and Detection, [Y. H. Pao, ed.], Academic Press, New York, 1977, 47-77) oder die Zellen miteinander verbunden sind und die Strahlung nur die Messzelle durch-setzt (G. Busse and D. Herboeck: Differential Helmholtz resonator as an opto-acoustic detector, Applied Optics, Vol 18, No. 23, 3959).

Beim Nachweis von Aerosolen verhält es sich ähnlich, auch diese absorbieren die modulierte Strahlung, wodurch modulierte Wärme und von dieser modulierter Druck erzeugt wird. Bisher beschriebene optoakustische Sensoren für die Messung von Aerosolen sind meistens Monosensoren mit nur einer Messzelle. Wenn für die Aerosolmessung Sensoren mit zwei Zellen, sogenannte Dualsensoren mit einer Mess- und einer Referenzzelle vorgeschlagen werden, dann sind diese so aufgebaut, dass die Referenzzelle gegen Aerosol abgeschirmt ist. Letzteres wird dadurch erreicht, dass die Luft gefiltert wird, bevor sie in die Referenzzelle gelangt. Ausserdem wird auf die starke Temperaturabhängigkeit der Resonanzfrequenz hingewiesen, welche eine Korrektur der Signalgrösse erfordert.

Bei Anwendung des Dual-Prinzips liegt die Nachweisempfindlichkeit optoakustischer Sensoren für Gase oder Aerosole im Bereich derjenigen von optischen Rauchmeldern. Da die optoakustischen Signale durch Absorption und nicht durch Streuung erzeugt werden, könnten mit dem optoakustischen Prinzip sowohl grosse und auch kleinste Aerosole bis unterhalb des μ-Bereichs detektiert und helle und dunkle Raucharten könnten etwa gleich gut gemessen werden. Trotzdem wird bisher das optoakustische Prinzip zur Rauchdetektion nicht verwendet, was hauptsächlich durch den für die Luftfilterung und die Korrektur der Signalgrösse erforderlichen zusätzlichen Aufwand bedingt ist.

Durch die Erfindung soll nun eine optoakustische Messanordnung der eingangs genannten Art angegeben werden, deren Kosten mit denjenigen eines Streulichtmelders konkurrenzfähig sind.

Diese Aufgabe wird erfindungsgemäss dadurch gelöst, dass die Mess- und die Referenzzelle gegenüber dem nachzuweisenden Gas und/oder Aerosol mindestens einseitig offen sind.

Da bei der erfindungsgemässen optoakustischen Messanordnung beide Zellen gegenüber dem nachzuweisenden Gas und/oder Aerosol offen sind, ist eine Filterung des zu untersuchenden Gases/Aerosols nicht erforderlich. Das Sensorsignal ist im Normalfall gleich Null, und erst bei Anwesenheit von Aerosol oder eines brennbaren Gases, welches die von der Strahlungsquelle ausgesandte Strahlung absorbiert, wird in der Messzelle ein Signal erzeugt, welches zu seiner Verarbeitung nur eine relativ einfache Elektronik benötigt.

Eine erste bevorzugte Ausführungsform der erfindungsgemässen Messanordnung ist dadurch gekennzeichnet, dass die Auswerteelektronik einen Differenzverstärker und einen phasenempfindlichen Gleichrichter enthält.

Eine zweite bevorzugte Ausführungsform der erfindungsgemässen Messanordnung ist dadurch gekennzeichnet, dass die Wellenlänge der von der Strahlungsquelle ausgesandten Strahlung so gewählt ist, dass sie von einem nachzuweisenden Gas absorbiert wird. Vorzugsweise ist im Bereich der Strahlungsquelle eine erste Fotozelle zur Überwachung der Intensität der von der Strahlungsquelle ausgesandten Strahlung angeordnet.

Eine dritte bevorzugte Ausführungsform der erfindungsgemässen Messanordnung ist dadurch gekennzeichnet, dass neben der Messzelle eine zweite Fotozelle angeordnet ist, welche bei Vorhandensein eines Aerosols von der durch dieses verursachten Streustrahlung der Strahlungsquelle beaufschlagt ist.

Eine auf diese Weise ausgebildete Messanordnung kann also sowohl ein Aerosol, also Rauch, als auch ein Gas nachweisen und ist damit hervorragend für die Verwendung als sogenannter Zweikriterienmelder für Rauch und Gas geeignet. Es verhält sich in der Praxis so, dass ein bestimmtes Aerosol in einem bestimmten Wellenlängenbereich absorbiert, wobei die Art des Aerosols vom Brandgut abhängt. Da aber der Rauch eines Feuers praktisch immer auch Mischungen von organischen Substanzen, wie beispielsweise Holz, enthält, welche im gesamten Infrarotbereich stark und im Bereich des sichtbaren Lichts immer noch ausreichend absorbieren, ist die Wahl der Wellenlänge für einen optimalen Aerosolnachweis nicht kritisch.

Wenn nur Rauch nachgewiesen werden soll, ist die zweiteFotozelle nicht erforderlich, weil in diesem Fall eine Wellenlänge gewählt werden kann, bei der keine brennbaren Gase absorbieren. Beim Nachweis von Rauch und Gas ist die seitliche Fotozelle jedenfalls dann erforderlich, wenn ein Gas detektiert werden soll, dessen Absorptionsbereich bei demjenigen von Aerosol liegt.

Eine vierte bevorzugte Ausführungsform der erfindungsgemässen Messanordnung ist dadurch gekennzeichnet, dass zwei Paare von beidseitig offenen Mess- und Referenzzellen vorgesehen sind, welche jeweils unterschiedliche Länge und somit unterschiedliche Resonanzfrequenzen aufweisen, dass jedem Referenz- und jedem Messzellenpaar je ein Mikrofon zugeordnet, und dass jede Messzelle von einer Strahlungsquelle beaufschlagt ist.

Die Messanordnung mit den zwei Paaren von Mess- und Referenzzellen eignet sich zum Nachweis von Rauch und von zwei Gasen. Durch Hinzufügung eines weiteren Paares mit einer Mess- und einer Referenzzelle kann der Nachweisbereich der Messanordnung auf ein drittes Gas erweitert werden.

Die Erfindung betrifft weiter eine Verwendung der genannten Messanordnung als Rauchmelder. Diese Verwendung ist dadurch gekennzeichnet, dass die Messanordnung eine Messzelle aufweist, welche von einer Strahlung einer Wellenlänge beaufschlagt ist, bei welcher das nachzuweisende Aerosol absorbiert und dadurch ein optoakustischer Effekt erzeugt wird.

Die Erfindung betrifft weiter eine Verwendung der genannten Messanordnung als Brandgefahrenmelder. Diese Verwendung ist dadurch gekennzeichnet, dass die Messanordnung eine Messzelle aufweist, welche von einer Strahlung einer Wellenlänge beaufschlagt ist, bei welcher eine nachzuweisende brennbare oder explosive Substanz absorbiert und dadurch ein optoakustischer Effekt erzeugt wird.

Die Erfindung betrifft weiter eine Verwendung der genannten Messanordnung als kombinierter Rauch- und Gasmelder. Diese Verwendung ist dadurch gekennzeichnet, dass die Messanordnung eine Messzelle aufweist, welche von einer Strahlung einer Wellenlänge beaufschlagt ist, bei welcher eine nachzuweisende brennbare oder explosive Substanz absorbiert und dadurch ein optoakustischer Effekt erzeugt wird, und dass neben der Messzelle eine Fotozelle so angeordnet ist, dass sie von durch ein Aerosol verursachtem Streulicht der Strahlung beaufschlagt wird.

Die Erfindung betrifft weiter eine Verwendung der genannten Messanordnung als kombinierter Brand- und Brandgefahrenmelder. Diese Verwendung ist dadurch gekennzeichnet, dass die Messanordnung zwei Messzellen aufweist, von denen die eine mit Strahlung einer Wellenlänge beaufschlagt ist, bei welcher das nachzuweisende Aerosol und oder ein Brandgas absorbiert, und von denen die andere mit Strahlung einer Wellenlänge beaufschlagt ist, bei welcher eine nachzuweisende brennbare oder explosive Substanz absorbiert und dadurch ein optoakustischer Effekt erzeugt wird.

Im folgenden wird die Erfindung anhand von Ausführungsbeispielen und der Zeichnungen näher erläutert; es zeigt:

Fig. 1    eine schematische Darstellung eines einseitig offenen, resonanten, optoakustischen Dualsensors für Rauch und Gas,

Fig. 2    eine schematische Darstellung eines beidseitig offenen, resonanten, optoakustischen Dualsensors für Rauch und Gas; und

Fig. 3    eine Weiterbildung des Dualsensors von Fig. 2.

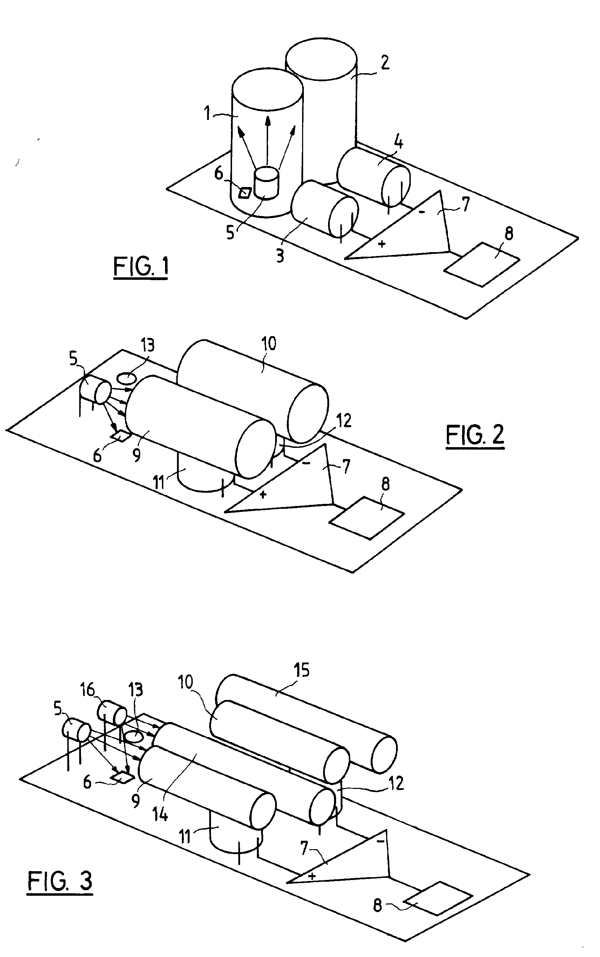

Die in Fig. 1 dargestellte optoakustische Messanordnung ist ein resonanter, einseitig offener Dualsensor mit einer rohrförmigen Messzelle 1 und einer rohrförmigen Referenzzelle 2, denen je ein Mikrofon 3 bzw. 4 zugeordnet ist. Ausserdem ist eine Strahlungsquelle 5, beispielsweise eine LED, vorgesehen, welche den Innenraum der Messzelle 1 mit Strahlung einer bestimmten Wellenlänge beaufschlagt. Neben der Strahlungsquelle 5 ist eine erste Fotozelle 6 zur Überwachung der Intensität der von der Strahlungsquelle 5 ausgesandten Strahlung angeordnet. Die Ausgänge der beiden Mikrofone 3 und 4 sind an einen Differenzverstärker 7 geführt, in welchem die Mikrofonsignale voneinander subtrahiert werden. Das Ausgangssignal des Differenzverstärkers 7 ist an einen phasenempfindlichen Gleichrichter (lock-in) 8 geführt.

Einseitig offene Rohre der Länge I haben eine Resonanzfrequenz $\upsilon_k$, die gegeben ist durch

$$\upsilon k = \frac{2k + 1}{4l}c, \qquad (k=0,1,2,3,...; c = \text{Schallgeschwindigkeit in Luft})$$

Bei einer Länge I von 2 cm ergibt sich eine Resonanzfrequenz $\upsilon_0$ = 4.1 kHz; bei einem beidseitig offenen Rohr ist diese Resonanzfrequenz doppelt so gross. Im Rohr treten also stehende Wellen auf, wobei beim einseitig offenen Rohr am geschlossenen Ende ein Druckbauch (= Bewegungsknoten) und am offenen Ende ein Druckknoten (= Bewegungsbauch) auftritt. Beim beidseitig offenen Rohr befindet sich der Druckbauch in der Mitte des Rohres und je ein Bewegungsbauch an jedem offenen Ende.

Die Strahlungsquelle 5 strahlt moduliert in die Messzelle 1, wobei die Modulationsfrequenz der Strahlungsquelle 5 mit der Resonanzfrequenz der Messzelle übereinstimmt. Wenn die Messzelle 1 ein Aerosol enthält, dann absorbiert dieses die modulierte Strahlung, wodurch modulierte Wärme erzeugt wird. Die modulierte Wärme erzeugt modulierten Druck und dadurch Schall mit der Frequenz der Resonanzfrequenz der Messzelle 1, wodurch die Luftsäule in der Messzelle zu Schwingungen angeregt wird. Gleiches gilt bei Vorhandensein eines Gases in der Messzelle 1. Das Mikrofon 3, welches sich am Ort eines Druckbauches der stehenden Welle befindet, misst die Schwingungen (= Ton) im Rohr. Sobald das Mikrofon 3 einen Ton misst, welcher mit der Resonanzfrequenz der Messzelle 1 übereinstimmt, befindet sich in der Messzelle 1 ein Aerosol und/oder ein Gas.

Im Unterschied zu einem Streulicht-Rauchmelder spricht die dargestellte Messanordnung auf dunkle und helle Aerosole gleich gut an: Dunkle Aerosole ergeben ein grosses Signal, weil schon beim ersten Auftreffen der Strahlung der Strahlungsquelle 5 auf ein Teilchen viel Strahlungsleistung absorbiert wird. Und helle Aerosole ergeben ebenfalls ein grosses Signal, da die Strahlung an den hellen Teilchen mehrfach reflektiert und in Summe ebenfalls stark absorbiert wird. Ausserdem spricht der optoakustische Sensor sowohl auf grosse Aerosole als auch auf sehr kleine unterhalb des µ-Bereichs an, da die optoakustischen Signale durch Absorption und nicht durch Streuung erzeugt werden.

Das Mikrofon 3 misst nicht nur die Resonanzschwingungen in der Messzelle 1, sondern auch alle Geräusche im Raum, was zu Störungen führen kann. Diese Störungen werden durch die Referenzzelle 2 und das Mikrofon 4 eliminiert. Da die Referenzzelle 2 nicht mit der Strahlung einer Strahlungsquelle beaufschlagt ist, kann das Mikrofon 4 auch keine von einer Strahlungsquelle hervorgerufenen Schwingungen messen, sondern misst ausschliesslich die Geräusche des Raumes. Die Signale des Referenzmikrofons 4 werden im Differenzverstärker 8 von den Signalen des Messmikrofons 3 subtrahiert, wodurch die Geräusche des Raumes eliminiert werden. Ebenfalls eliminiert werden Vibrationen, die auf beide Mikrofone gleich einwirken. Die beiden Zellen, Messzelle und Referenzzelle, können auch beidseitig offen sein.

Eine solche Anordnung mit einer beidseitig offenen Messzelle 9, einer beidseitig offenen Referenzzelle 10, einem Messmikrofon 11 und einem Referenzmikrofon 12 ist in Fig. 2 dargestellt. In Fig. 2 ist ausserdem eine zweite Fotozelle 13 eingezeichnet, welche im Bereich zwischen der Strahlungsquelle 5 und der Messzelle 1 angeordnet ist. Die Lage der zweiten Fotozelle 13 ist so gewählt, dass bei Vorhandensein von Partikeln in dem Bereich zwischen Strahlungsquelle 5 und Messzelle 1 ein Teil des von diesen verursachten Streulichts der Strahlung der Strahlungsquelle 5 auf die Fotozelle 13 fällt. Die zweite Fotozelle 13 ermöglicht eine Unterscheidung zwischen Aerosol und Gas. Wenn sowohl die Messzelle 1 als auch die zweite Fotozelle 13 ein Signal liefern, dann ist ein Aerosol vorhanden. Wenn nur die Messzelle 1 ein Signal liefert, dann ist entweder ein Gas oder ein sehr kleines und damit nicht streuendes Aerosol vorhanden.

Wenn auf die Unterdrückung von Geräuschen im Raum und von Vibrationen verzichtet werden kann, könnte grundsätzlich mit einer Messanordnung ohne Referenzzelle 2 und das dieser zugeordnete Mikrofon 4 das Auslangen gefunden werden. Wenn man bei einer solchen Anordnung die Wellenlänge der Strahlungsquelle 5 beispielsweise auf die $CO_2$-Linie legt, dann wird die Messanordnung sehr empfindlich einerseits die Konzentration des Brandgases $CO_2$ und andererseits die Konzentration von Aerosol messen.

Die in den Fig. 1 und 2 dargestellte Messanordnung kann als Gasmelder, als Rauch (Aerosol)-Melder, als kombinierter Gas- und Rauchmelder ausgelegt und sie kann in diesen verschiedenen Ausbildungen als Brandmelder oder als Brandgefahrenmelder verwendet werden. Ein Brandmelder detektiert Rauch und/oder von Brandgase, oder allgemein, Stoffe, die einen Brand charakterisieren. Ein Brandgefahrenmelder detektiert einerseits einen schon existierenden Brand durch Nachweis eines Aerosols oder von in einem Brand entstehenden Substanzen, er weist andererseits in einem Brand entstehende toxische Substanzen nach, und er erkennt die Gefahr eines möglichen Brandes oder einer möglichen Explosion anhand der Detektion der Anwesenheit brennbarer Stoffe in der Luft.

Stoffe, welche einen Brand charakterisieren, sind insbesondere die folgenden: $CO_2$, $CO$, $NO$, $NO_2$, $SO_2$, $NH_3$, $HCl$, $HF$, $HCN$, Amine und Amide, Kohlenwasserstoffe, C, O und H enthaltende Verbindungen; Aerosole. Brennbare Substanzen sind allgemein Kohlenwasserstoffe, speziell $CH_4$, $C_2H_6$, $C_3H_8$, $C_4H_{10}$, $C_2H_2$, $C_2H_4$, sowie allgemein Lösungsmittel, Alkohole, Äther, Ketone, Aldehyde, Amine und Amide, insbesondere Methanol, Äthanol, n-Propanol, Diäthyläther, Aceton. Weitere brennbare Substanzen, die ein Brandgefahrenmelder nachweisen sollte, sind C, O und H enthaltende Verbindungen und Carbonsäuren. Toxische Stoffe sind $CO_2$, $CO$, $NO$, $NO_2$, $SO_2$, $NH_3$, $HCl$, $HF$, $HCN$, $H_2S$, Nitrile, Phosphorsäureester, Mercaptane, halogenierte Verbindungen.

Da die Schallgeschwindigkeit in der Luft temperaturabhängig ist und sich im Temperaturbereich eines Brandmelders von -20°C bis +70°C um bis zu 30% ändern kann, kann sich auch die Resonanzfrequenz entsprechend ändern. Ebenso beeinflusst auch Wasserdampf die Schallgeschwindigkeit und damit die Resonanzfrequenz. Zur Ausschaltung dieser Einflüsse kann man mit einer Temperaturmessung den ungefähren Bereich der Resonanzfrequenz und die zusätzlich mögliche Ausweitung des Frequenzbereichs durch variierenden Gehalt an Wasserdampf in der Luft berechnen und die Modulationsfrequenz der Strahlungsquelle in diesem Bereich zeitlich verändern (wobbeln).

Eine weitere Störmöglichkeit besteht durch Frequenzen im Raum, welche mit der Resonanzfrequenz übereinstimmen. Solche Frequenzen regen beide Zellen zum Schwingen an, können aber durch die Differenzschaltung nicht vollständig zu Null subtrahiert werden, weil sie wegen des Abstands vom Zentrum der Messzelle 1, 9 zum Zentrum der Referenzzelle 2, 10 mit einer zeitlichen Verschiebung auf die Zellen auftreffen und diese zu leicht phasenverschobenen Schwingungen anregen. Diese Phasenverschiebung kann durch eine möglichst tiefe Resonanzfrequenz minimiert werden, weil dann die störenden Ton-Frequenzen eine grosse akustische Wellenlänge haben und die Phasenverschiebung klein wird. Oder man kann das Signal der Referenzzelle 2, 10 separat messen und beim Auftreffen eines Signals in der Referenzzelle, welches ja nur von aussen erzeugt sein kann, die Alarmschwelle der Messanordnung erhöhen.

Weitere potenzielle Störgrössen sind unterschiedliche Längen der Zellen. Diese Störgrössen kann man dadurch ausschalten, dass man die Resonanzfrequenz einer der beiden Zellen misst und die Länge der anderen Zelle entsprechend mechanisch verändert. Man kann auch die Resonanzfrequenz der Referenzzelle messen und die Strahlungsquelle 5 so platzieren, dass ihre Position die Resonanzfrequenz der Messzelle beeinflusst und mit der Referenzzelle in Übereinstimmung bringt.

Als weitere Kontrolle empfiehlt sich die Überwachung der Mikrofonempfindlichkeit anhand der von der Strahlungsquelle in der Wand der Messzelle 1, 9 erzeugten Nullpunktsignale, die unter allen Umweltbedingungen auftreten.

Die in den Fig. 1 und 2 dargestellte Anordnung zur Messung/Detektion von Rauch und eines Gases kann durch ein zusätzliches Zellenpaar für die Messung/Detektion eines weiteren Gases erweitert werden. Gemäss Fig. 3 ist eine zusätzliche Messzelle 14, eine zusätzliche Referenzzelle 15 und eine zusätzliche Strahlungsquelle 16 vorgesehen, wobei beispielsweise die Messzelle 9 Aerosol und ein erstes Gas misst und die Messzelle 14 ein zweites Gas. Die beiden Messzellen 9 und 14 und entsprechend auch die beiden Referenzzellen 10 und 15 haben unterschiedliche Längen und damit auch verschiedene Resonanzfrequenzen und die beiden Messzellen werden von den Strahlungsquellen 5 bzw. 16 mit Strahlung unterschiedlicher Wellenlängen beaufschlagt. Die beiden unterschiedlichen Resonanzfrequenzen können mit nur einem Messmikrofon 11 gemessen werden. Ebenso ist nur ein Referenzmikrofon 12 und nur eine einzige Fotozelle 6 für die Überwachung der Emission der beiden Strahlungsquellen 5 und 16 erforderlich.

Die Mess- und Referenzzellen können beispielsweise folgende Abmessungen haben:

Messzelle 9, Referenzzelle 10: Länge je 2 cm, Resonanzfrequenz je 8.2 kHz
Messzelle 14, Referenzzelle 15: Länge je 2.2 cm, Resonanzfrequenz je 7.6 kHz.

Die Modulationsfrequenz der Strahlungsquelle 5 beträgt entsprechend 8.2 kHz und diejenige der Strahlungsquelle 16 beträgt 7.6 kHz. Als Strahlungsquellen werden LEDs verwendet.

Der Zusatzaufwand für die Detektion eines zweiten Gases beträgt also nur die Kosten für das zweite Zellenpaar und für die zweite Strahlungsquelle. Es ist leicht einzusehen, dass ein Ausbau für die Detektion eines dritten Gases nur ein weiteres Zellenpaar und eine weitere Strahlungsquelle erfordert.

Neben den resonanten ein- oder beidseitig offenen optoakustischen Dualsensoren sind auch nichtresonante, geschlossene Dualsensoren bekannt (siehe beispielsweise EP-A-0 855 592), welche ebenfalls so ausgebildet werden können, dass mit ihnen der Nachweis von Aerosolen und Gasen möglich wird. Wie der EP-A-0 855 592 zu entnehmen ist, enthalten diese optoakustischen Dualsensoren eine Mess- und eine Referenzzelle, die durch je eine Membran gegenüber der Umwelt abgeschlossen sind, und eine Strahlungsquelle. Durch die Membran kann Gas in die Zellen eindringen. Es ist ein Mess- und ein Referenzmikrofon vorgesehen, wobei das Referenzmikrofon gegenüber optoakustischen Signalen des nachzuweisenden Gases/Aerosols abgeschirmt ist. Damit auch Aerosolteilchen in die Zellen eindringen können, ist die Porenweite der Membranen entsprechend vergrössert.

Dadurch werden aber die Membranen für Frequenzen unterhalb von 500 Hz akustisch weich, es ist kein Druckaufbau in der Zelle mehr möglich und die Empfindlichkeit sinkt stark. Durch Erhöhung der Modulationsfrequenz auf einige Kilohertz werden die Membranen wieder akustisch hart und die Empfindlichkeit sinkt nicht mehr ab. Eine eventuelle Verstopfung der Membranen kann man dadurch überwachen, dass man das Referenzsignal separat misst, was einen Grundpegel an Rauschen ergibt, und die Empfindlichkeit anhand dieses Grundpegels nachführt. Wenn man die Wellenlänge der Strahlungsquelle beispielsweise auf die $CO_2$-Linie legt, dann wird die Messanordnung sehr empfindlich die Konzentration des Brandgases $CO_2$ messen. Andererseits wird aber auch die Konzentration von Aerosol sehr empfindlich gemessen, weil Cellulose und angekohlte Celluloseteilchen im gesamten Infrarot intensiv absorbieren. Das Volumen pro Zelle beträgt etwa 2 mal 2 mal 2 $cm^3$.

**Patentansprüche**

1. Optoakustische Messanordnung für den Nachweis von Gasen und/oder Aerosolen, mit je einer Mess- und Referenzzelle (1, 9, 14 bzw. 2, 10, 15) und diesen zugeordneten Mikrofonen (3, 11 bzw. 4, 12), an welche eine Auswerteelektronik (7, 8) angeschlossen ist, in welcher eine Subtraktion der Signale der Mikrofone (3, 11 bzw. 4, 12) erfolgt, und mit einer Strahlungsquelle (5, 16) zur modulierten Beaufschlagung der Messzelle (1, 9, 14), wobei die Modulationsfrequenz der Strahlungsquelle (5, 16) mit der Resonanzfrequenz der Messzelle (1, 9, 14) übereinstimmt, **dadurch gekennzeichnet, dass** die Mess- und die Referenzzelle (1, 9, 14 bzw. 2, 10, 15) gegenüber dem nachzuweisenden Gas und/oder Aerosol mindestens einseitig offen sind.

2. Messanordnung nach Anspruch 1, **dadurch gekennzeichnet, dass** die Auswerteelektronik einen Differenzverstärker (7) und einen phasenempfindlichen Gleichrichter (8) enthält.

3. Messanordnung nach Anspruch 1 oder 2, **dadurch gekennzeichnet, dass** die Wellenlänge der von der Strahlungsquelle (5, 16) ausgesandten Strahlung so gewählt ist, dass sie von einem nachzuweisenden Gas absorbiert wird.

4. Messanordnung nach Anspruch 3, **dadurch gekennzeichnet, dass** im Bereich der Strahlungsquelle (5, 16) eine erste Fotozelle (6) zur Überwachung der Intensität der von der Strahlungsquelle (5, 16) ausgesandten Strahlung angeordnet ist.

5. Messanordnung nach Anspruch 3, **dadurch gekennzeichnet, dass** neben der Messzelle (9, 14) eine zweite Fotozelle (13) angeordnet ist, welche bei Vorhandensein eines Aerosols von der durch dieses verursachten Streustrahlung der Strahlungsquelle (5, 16) beaufschlagt ist.

6. Messanordnung nach Anspruch 4 oder 5, **dadurch gekennzeichnet, dass** zwei Paare von beidseitig offenen Mess- und Referenzzellen (9, 14; 10, 15) vorgesehen sind, welche jeweils unterschiedliche Länge unsdsomit unterschiedliche Resonanzfrequenzen aufweisen, dass jedem Referenz- und jedem Messzellenpaar (9, 14 bzw. 10, 15) je ein Mikrofon (11 bzw. 12) zugeordnet, und dass jede Messzelle (9, 14) von einer Strahlungsquelle (5 bzw. 16) beaufschlagt ist.

7. Messanordnung nach einem der Ansprüche 1 bis 6, **dadurch gekennzeichnet, dass** ein Sensor zur Messung der Umgebungstemperatur vorgesehen ist, und dass eine Einstellung der Modulationsfrequenz der Strahlungsquelle (5, 16) auf einen der gemessenen Umgebungstemperatur entsprechenden Frequenzbereich und eine zeitliche Veränderung der Modulationsfrequenz innerhalb dieses Frequenzbereichs erfolgt.

8. Verwendung der Messanordnung nach einem der Ansprüche 1 bis 7 als Rauchmelder, **dadurch gekennzeichnet, dass** die Messanordnung eine Messzelle (1, 9, 14) aufweist, welche von einer Strahlung einer Wellenlänge beaufschlagt ist, bei welcher das nachzuweisende Aerosol absorbiert und dadurch ein optoakustischer Effekt erzeugt wird.

9. Verwendung der Messanordnung nach einem der Ansprüche 1 bis 7 als Brandgefahrenmelder, **dadurch gekennzeichnet, dass** die Messanordnung eine Messzelle (1, 9, 14) aufweist, welche von einer Strahlung einer Wellenlänge beaufschlagt ist, bei welcher eine nachzuweisende brennbare oder explosive Substanz absorbiert und dadurch ein optoakustischer Effekt erzeugt wird.

10. Verwendung nach Anspruch 9, **dadurch gekennzeichnet, dass** die nachzuweisende brennbare oder explosive Substanz durch eine oder mehrere der folgenden Stoffe gebildet ist: Kohlenwasserstoffe, speziell $CH_4$, $C_2H_6$, $C_3H_8$, $C_4H_{10}$, $C_2H_2$, $C_2H_4$, sowie allgemein Lösungsmittel, Alkohole, Äther, Ketone, Aldehyde, Amine und Amide, insbesondere Methanol, Äthanol, n-Propanol, Diäthyläther, Ace-ton, C, O und H enthaltende Verbindungen, Carbonsäuren.

11. Verwendung nach Anspruch 9, **dadurch gekennzeichnet, dass** die Messanordnung eine Messzelle (1, 9, 14) aufweist, welche von einer Strahlung einer Wellenlänge beaufschlagt ist, bei welcher eine nachzuweisende toxische Substanz absorbiert und dadurch ein optoakustischer Effekt erzeugt wird.

12. Verwendung nach Anspruch 11, **dadurch gekennzeichnet, dass** die nachzuweisende toxische Substanz durch einen oder mehrere der folgenden Stoffe gebildet ist: $CO_2$, CO, NO, $NO_2$, $SO_2$, $NH_3$, HCI, HF, HCN, $H_2S$, Nitrile, Phosphorsäureester, Mercaptane, halogenierte Verbindungen.

13. Verwendung der Messanordnung nach einem der Ansprüche 1 bis 7 als kombinierter Rauch- und Gasmelder, **dadurch gekennzeichnet, dass** die Messanordnung eine Messzelle (9, 14) aufweist, welche von einer Strahlung einer Wellenlänge beaufschlagt ist, bei welcher eine nachzuweisende brennbare oder explosive Substanz absorbiert und dadurch ein optoakustischer Effekt erzeugt wird, und dass neben der Messzelle (9, 14) eine Fotozelle (13) so angeordnet ist, dass sie von durch ein Aerosol verursachtem Streulicht der Strahlung beaufschlagt wird.

FIG. 1

FIG. 2

FIG. 3

**Europäisches Patentamt**

# EUROPÄISCHER RECHERCHENBERICHT

Nummer der Anmeldung

EP 00 12 1937

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,Y | EP 0 855 592 A (CERBERUS AG) 29. Juli 1998 (1998-07-29) * Spalte 1, Zeile 3 - Zeile 27 * * Spalte 4, Zeile 33 - Spalte 5, Zeile 45 * * Abbildungen * | 1-4,9, 11,12 | G01N21/17 |
| Y | US 4 688 942 A (DENTON MEDONA B ET AL) 25. August 1987 (1987-08-25) * Spalte 1, Zeile 8 - Zeile 11 * * Spalte 2, Zeile 8 - Zeile 15 * * Spalte 2, Zeile 54 - Zeile 59 * * Abbildung 1 * | 1-4,9, 11,12 | |
| A | US 4 594 004 A (ISHIDA KOZO ET AL) 10. Juni 1986 (1986-06-10) * Spalte 3, Zeile 22 - Spalte 38 * * Ansprüche * | 1,2,8 | |
| A | US 4 817 413 A (ASANO ICHIRO ET AL) 4. April 1989 (1989-04-04) * Spalte 1, Zeile 12 - Zeile 25 * * Spalte 2, Zeile 21 - Zeile 58 * * Anspruch 1 * | 1,2,8 | RECHERCHIERTE SACHGEBIETE (Int.Cl.7) G01N |

Der vorliegende Recherchenbericht wurde für alle Patentansprüche erstellt

| Recherchenort | Abschlußdatum der Recherche | Prüfer |
|---|---|---|
| DEN HAAG | 2. März 2001 | Krametz, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 12 1937

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 0855592 | A | 29-07-1998 | US | 6006585 A | 28-12-1999 |
| US 4688942 | A | 25-08-1987 | KEINE | | |
| US 4594004 | A | 10-06-1986 | JP | 1474290 C | 18-01-1989 |
| | | | JP | 59005939 A | 12-01-1984 |
| | | | JP | 63021131 B | 02-05-1988 |
| | | | DE | 3322870 A | 05-01-1984 |
| | | | GB | 2123145 A,B | 25-01-1984 |
| US 4817413 | A | 04-04-1989 | JP | 1750584 C | 08-04-1993 |
| | | | JP | 4041297 B | 07-07-1992 |
| | | | JP | 59145957 A | 21-08-1984 |
| | | | DE | 3345077 A | 12-07-1984 |

EPO FORM P0461

Für nähere Einzelheiten zu diesem Anhang : siehe Amtsblatt des Europäischen Patentamts, Nr.12/82